# EUROPÄISCHE PATENTSCHRIFT

(11) **EP 0 656 223 B1**
(45) Veröffentlichungstag und Bekanntmachung des Hinweises auf die Patenterteilung: **14.01.1998**
(21) Anmeldenummer: 94113578.2
(22) Anmeldetag: 31.08.1994
(51) Int. Cl.: B01D 29/25, B01D 29/68, B01D 36/02

(54) **Rückspülfilter**
Backwashfilter
Filtre à rinçage à contre-courant

(30) Priorität: 26.11.1993 DE 4340275
(43) Veröffentlichungstag der Anmeldung: 07.06.1995
(73) Patentinhaber: Boll & Kirch Filterbau GmbH, D-50170 Kerpen (DE)
(72) Erfinder: Lennartz, Rüdiger, D-50259 Pulheim (DE); Rott, Willi, D-53332 Bornheim (DE); Sindorf, Heinz, D-41569 Rommerskirchen (DE)
(74) Vertreter: Vollbach, Hans, Dipl.-Ing.

(56) Entgegenhaltungen:
- DE-A- 4 030 084
- DE-B- 1 299 284
- DE-C- 217 777
- SOVIET PATENTS ABSTRACTS Week 9240, 18. November 1992 Derwent Publications Ltd., London, GB; AN 92-330167/40 & SU-A-1 699 515 (URALS BRANCH HEAT) 23. Dezember 1991

## Beschreibung

Die Erfindung betrifft einen Rückspülfilter, der mit der zu filtrierenden Schmutzflüssigkeit rückspülbar ist, mit im Filtergehäuse kreisförmig zueinander angeordneten, in Längsrichtung von der Schmutzflüssigkeit durchströmten Filterelementen, die mit dem Filtereinlaß verbunden bzw. verbindbar sind und zur Rückspülung einzeln oder gruppenweise mit ihrem einen Ende an ein mit einem Schlammablauf in Verbindung stehendes, von einem Drehantrieb angetriebenes Spülglied anschließbar sind.

Bei diesem bekannten Rückspülfilter (DE-OS 40 30 084) werden Filterelemente verwendet, die an ihrem einen Ende zur Schmutzflüssigkeitsseite hin offen sind und an ihrem anderen Ende über einen Ringkanal untereinander verbunden sind. Im Filtrierbetrieb werden die Filterelemente dieses bekannten Filters von ihrem offenen Ende zum Ringkanal hin durchströmt. Im Rückspülbetrieb wird mindestens ein Filterelement an das Spülglied angeschlossen, so daß die in den Ringkanal gelangende Schmutzflüssigkeit aus den übrigen Filterelementen mit großer Geschwindigkeit im Gegenstrom zur Filtrierrichtung durch das oder die rückzuspülende (n) Filterelement (e) zum Schlammablaß strömt und dabei den abfiltrierten Schmutz von der Filterinnenseite mitnimmt.

Dieser bekannte Filter hat den Nachteil, daß die Druckverluste insbesondere bei Verwendung kleinerer Filterelemente verhältnismäßig groß sind. Außerdem besteht die Gefahr, daß sich die Filterelemente im Bereich des Ringkanals mit Schmutz zusetzen, da dort die Strömungsgeschwindigkeit der Schmutzflüssigkeit nur gering ist. Zum Rückspülen der einzelnen Filterelemente wird Schmutzflüssigkeit verwendet, die besonders stark verunreinigt ist, da sie bereits durch andere Filterelemente durchgeleitet wurde und sich dabei die Schmutzkonzentration gegenüber der Eintrittsbeladung erhöht hat. Dadurch ist für die erfolgreiche Rückspülung eine verhältnismäßig große Schmutzflüssigkeitsmenge erforderlich.

Es wird weiterhin auf die DE-1 299 284 hingewiesen. Bei diesem bekannten Filter werden die einzelnen Filterrohre mit Filtrat, d.h. bereits filtrierter Schmutzflüssigkeit rückgespült, während bei dem Rückspülfilter nach der Erfindung die Rückspülung einerseits mit der zu filtrierenden Schmutzflüssigkeit und darüber hinaus zusätzlich mit Filtrat erfolgt. Die Rückspülung allein mit Filtrat wie bei der DE-AS 1 299 284 hat den Nachteil, daß die Spülwirkung von dem Flüssigkeitsdruck auf der Sauberseite der Filterrohre abhängig ist. Je größer die Verschmutzung der Filterrohre ist, desto größer muß das Druckgefälle von der Sauberseite zur Schmutz-(Innen)Seite der Filterrohre sein, damit überhaupt noch eine Spülung der Filterrohre erfolgt.

Aufgabe der Erfindung ist es, einen Rückspülfilter der eingangs genannten Art zu schaffen, der neben einer hohen Filtrierleistung bei geringen Filterabmessungen eine besonders effektive Rückspülung der einzelnen Filterelemente ermöglicht und bei dem die Gefahr des Verstopfens der Filterelemente durch sich ablagernden Schmutz sicher vermieden werden kann.

Diese Aufgabe wird durch den Rückspülfilter von Anspruch 1 gelöst.

Diese Ausgestaltung hat den Vorteil, daß die Filterelemente von beiden Enden mit Schmutzflüssigkeit beaufschlagt werden und sich so der Einströmquerschnitt für die Schmutzflüssigkeit in jedes Filterelement verdoppelt. Dadurch werden die Druckverluste auf der Schmutzflüssigkeitsseite der Filterelemente erheblich verringert. Da die Filterelemente beidseitig zum Schmutzflüssigkeitszulauf offen sind und von beiden Enden durchströmt werden, ist die Gefahr von Verstopfungen durch Schmutzpartikel sehr gering. Bei Anschluß des Spülgliedes an ein Ende eines Filterelements wird dieses besonders effektiv mit noch unfiltrierter Schmutzflüssigkeit rückgespült, die in turbulenter Strömung im Querstrom, d.h. quer zur Filtrierrichtung, durch das Filterelement fließt. Aufgrund des beim Rückspülen im Inneren des Filterelements gegenüber der Außenseite herrschenden geringeren Druckniveaus wird die Abreinigung des Filterelements durch die im Querstrom fließende Schmutzflüssigkeit noch durch in das Filterinnere zurückströmendes Filtrat verbessert. Dadurch wird eine sehr effektive Rückspülung der Filterelemente auch mit geringen Rückspülflüssigkeitsmengen möglich.

Die Filterelemente sind an ihrem dem Spülglied entgegenliegenden Einlaufende mit einem oder mehreren Drosselelement (en) abgedeckt bzw. abdeckbar sind. Dadurch ist das Druckniveau im rückzuspülenden Filterelement genau einstellbar und es ist sichergestellt, daß der Druck im Inneren des von der Schmutzflüssigkeit durchströmten Filterelements über die gesamte Filterelement-Länge niedriger ist als der Druck in der das Filterelement umschließenden Filtratkammer. Dadurch ist sichergestellt, daß beim Rückspülvorgang an keiner Stelle des Filterelements Schmutzflüssigkeit in Filtrierrichtung durch das Filtermittel gepreßt wird, sondern vielmehr über die gesamte Länge Filtrat in das Innere des Filterelements zurückströmen kann.

Das Drosselelement ist zweckmäßig eine Drosselscheibe, die sich im Abstand von dem Einlaufende befindet und mit diesem einen Ringspalt bildet. Diese Ausgestaltung ist besonders einfach im Aufbau und wartungsarm. Da sich das als Drosselscheibe ausgebildete Drosselelement im Abstand vom Einlaufende des Filterelements befindet, kann an dieser Stelle auf aufwendig zu fertigende Dichtflächen o.dgl. verzichtet werden.

Besonders vorteilhaft ist es, wenn die Drosselscheibe in ihrem Abstand zum Einlaufende einstellbar ist. Dadurch kann der Einlaufquerschnitt beim rückzuspülenden Filterelement und dadurch das Druckniveau genau eingestellt werden. Das Drosselelement und das Spülglied sind zweckmäßig an einer gemeinsamen, im Inneren des Filtergehäuses angeordneten Drehwelle befestigt. Spülglied und Drosselelement können dann gemeinsam verdreht und auf das bzw. die rückzuspülende (n) Filterelement (e) eingestellt werden.

Wenn die Filterelemente auf mindestens zwei zueinander konzentrischen Lochkreisen angeordnet sind, können eine große Anzahl hiervon auf vergleichsweise kleinem Raum angeordnet sein, von denen dann jeweils die größte Anzahl im Filtrierbetrieb arbeitet und nur immer ein oder einige wenige Filterelemente rückgespült werden. Dadurch werden größere Druckeinbrüche durch das Rückspülen vermieden und die Menge an für die Rückspülung erforderlicher Flüssigkeit im Verhältnis zum Gesamtdurchsatz des Filters gering gehalten.

Eine besonders günstige Anordnung ergibt sich, wenn das Filtergehäuse eine erste Einlaufkammer und eine mit dieser über eine Verbindungsleitung verbundene zweite Einlaufkammer aufweist. Die Verbindungsleitung liegt zweckmäßig im Zentrum der in Kreisringen angeordneten Filterelemente, was eine besonders kompakte Filterkonstruktion erlaubt. Die Filterelemente können dann vorzugsweise geradlinig verlaufende, beidseitig offene Filterkerzen sein, die zwischen einer ersten Lochringplatte und einer zweiten Lochringplatte angeordnet sind, die für jede Filterkerze ein Loch für den Schmutzflüssigkeitsdurchtritt aufweisen. In dieser Ausgestaltung können die Filterelemente nach Entfernen der Filtergehäuseabdeckung leicht einzeln ausgetauscht werden, indem sie in Längsrichtung durch das jeweilige Loch in der einen Lochplatte herausgezogen werden. Es ist auch möglich, den gesamten Satz Filterkerzen zusammen mit einer Lochplatte aus dem Filter zu entnehmen und gegen einen neuen Filtereinsatz auszutauschen. Eine der Lochringplatten bildet zweckmäßig eine Steuerspiegelfläche für das Spülglied, das mit mindestens einem auf der Steuerspiegelfläche gleitenden Anschlußstück versehen ist und die Löcher bei seiner Drehbewegung in wechselnder Folge mit dem Schlammablauf verbindet. Diese Ausgestaltung stellt den dichten Anschluß zwischen den jeweiligen rückzuspülenden Filterelementen und dem Spülglied auf besonders einfache Art und Weise sicher und ist besonders verschleiß- und wartungsarm.

Wenn das Spülglied wenigstens zwei radiale Spülarme aufweist, wobei der eine Spülarm die Filterelemente am äußeren Kreisring und der andere Spülarm die Filterelemente am inneren Kreisring für die Rückspülung ansteuert, können die einzelnen Filterelemente am inneren und äußeren Kreisring mit nur einer Rückspülvorrichtung rückgespült werden. In diesem Falle werden zweckmäßig ein Filterelement am Innenring und eines am Außenring gleichzeitig abgereinigt.

Die Drehwelle für das Spülglied ist vorzugsweise als Hohlwelle ausgebildet und bildet eine Schlammabzugsleitung für die Spülflüssigkeit. Diese Anordnung ist besonders platzsparend und vermeidet aufwendige Dichtanschlüsse zwischen dem drehbaren Spülglied und einer drehfesten Schlammabzugsleitung. Die Schlammabzugsleitung kann in eine Schlammsammelkammer mit einem Nachschaltfilter und/oder - sieb münden, in der grobe Verunreinigungen wie beispielsweise grobe Fasern o.dgl., die sich nach dem Rückspülen im Rückspülschlamm befinden, von dem Sieb zurückgehalten werden, bevor dieser einer nachgeschalteten Schlammaufbereitung zugeführt wird. Der Nachschaltfilter bzw. das Sieb kann eine zylindrische Filterfläche aufweisen, die von innen nach außen durchströmt ist und der zweckmäßig an ihrer Innenseite eine Abreinigungsvorrichtung zugeordnet ist, die drehfest mit der Drehwelle des Spülgliedes verbunden ist. Beim Verdrehen des Spülglieds fährt die Abreinigungsvorrichtung an der Innenseite der Filterfläche entlang und entfernt dadurch die zurückgehaltenen groben Verunreinigungen von diesem, die dann über einen separaten Grobpartikelabzug aus der Schlammsammelkammer entfernt werden können. Dabei ist es besonders vorteilhaft, wenn die Abreinigungsvorrichtung mit Schlammsprühdüsen versehen ist, die mit der Schlammabzugsleitung verbunden sind und von dieser mit Schlamm beaufschlagt sind. Die Schlammsprühdüsen sind bevorzugt etwa tangential zur zylindrischen Filterfläche ausgerichtet und sprühen die über das Spülglied abgezogene Rückspülflüssigkeit tangential auf das Sieb auf, das dadurch sowohl mechanisch durch die Abreinigungsvorrichtung als auch hydraulisch von anhaftenden Verunreinigungen gereinigt wird.

Als Filterelemente für den erfindungsgemäßen Rückspülfilter können an sich bekannte Spaltfilterkerzen dienen. Besonders eignen sich jedoch Filterkerzen mit einem sich in Längsrichtung erstreckenden Stützkörper mit mindestens drei zueinander parallelen Stützkanten und einem den Stützkörper umgebenden und nur an den Stützkanten anliegenden Filtermittel. Eine derartige Filterkerze, die auch bei anderen Filtern bevorzugt einsetzbar und der ein eigenständiger Schutz zukommt, hat den Vorteil, daß das Filtermittel auch im Inneren der Kerze eine weitgehend ebene Fläche bildet, die in Durchströmrichtung der Schmutzflüssigkeit keine vom Stützkörper gebildeten Hindernisse aufweist, an denen sich Schmutzpartikel anlegen und das Filtermittel verstopfen können. Bei dieser Art Kerzen ist es besonders gut möglich, die Rückspülung mit turbulenter Strömung durchzuführen, wobei die Strömungsgeschwindigkeit bis unmittelbar an das Filtermittel heran sehr hoch ist und keine durch Hindernisse hervorgerufenen Wirbel o.dgl. auftreten, die die Anlagerung von Schmutz begünstigen. Durch die über die gesamte Kerzenlänge glatte, nicht unterbrochene Filterfläche hat diese Filterkerze nicht nur eine geringe Verstopfungsneigung, sondern läßt sich auch besonders leicht und mit wenig Flüssigkeit rückspülen.

Der Stützkörper kann ein etwa sternförmiges Querschnittsprofil haben, dessen Sternspitzen die Stützkanten bilden. Der Stützkörper, dar aus Kunststoff oder Metall bestehen kann, unterteilt dann die Filterkerze in mehrere einzelne, im Querschnitt etwa dreieckförmige Filterkammern, die untereinander keine Verbindung haben und deren eine Seite von dem Filtermittel gebildet wird, das sich über die Stützkanten abstützend um den Stützkörper gelegt ist. Je nach Größe des gewünschten Durchtrittsquerschnitts einer Filterkammer hat der Stützkörper etwa vier bis sechs Stützkanten, wobei bei kleineren Kerzen bevorzugt lediglich vier Stützkanten vorgesehen sind, damit die Querschnittsfläche der einzelnen Filterkammern noch ausreichend groß ist, um eine möglichst druckverlustarme Schmutzflüssigkeitsströmung zu gewährleisten. Bei Kerzen größerer Abmessungen werden bevorzugt sechs oder mehr Stützkanten vorgesehen, um dadurch die Stützweite zwischen den Stützkanten gering zu halten.

Das Filtermittel besteht zweckmäßig aus einem Gewebeschlauch, der wie ein beidseitig offener Strumpf über den Stützkörper gezogen werden kann. Dabei kann es sich auch um ein besonders feinmaschiges Gewebe mit einer Maschenweite von 50µm , in besonderen Fällen sogar von lediglich 25µm handeln. Mit einem derartig feinen Gewebe können auch sehr kleine Partikel im Flüssigkeitsstrom zurückgehalten werden.

Der Stützkörper für das Filtermittel kann auch aus mehreren, vorzugsweise sechs Stützstäben bestehen, die die Stützkanten bilden und die sich an mindestens einem zentralen Versteifungselement abstützen, wobei das Versteifungselement zweckmäßig aus einem im Querschnitt etwa kreisringförmigen Spiralkörper besteht. Diese Ausgestaltung ist insbesondere dann vorteilhaft, wenn es unerwünscht ist, die Filterkerze im Inneren nochmals in mehrere einzelne Kammern zu unterteilen, beispielsweise dann, wenn mit einzelnen größeren Schmutzpartikeln im Flüssigkeitsstrom zu rechnen ist, die sich aufgrund des engen Strömungsquerschnitts der einzelnen Filterkammern in diesen festsetzen und nur schwer wieder entfernen lassen. Auch bei dieser Ausführungsform liegt das Filtermittel nur an wenigen, sich in Längsrichtung der Filterkerze erstreckenden Stützkanten an und bildet sonst auf der Filterinnenseite glatte Flächen, an denen die Schmutzflüssigkeit beim Rückspülen mit großer turbulenter Geschwindigkeit entlangströmen und die abgefilterten Partikel mitnehmen kann. Der Spiralkörper kann bevorzugt aus einem Stahldraht in Form einer Schraubendruckfeder bestehen, an der die Stützstäbe von außen in gleichmäßiger polygonaler Anordnung angelötet, angeschweißt oder auf sonstige Weise befestigt sind.

Weitere vorteilhafte Ausgestaltungsmerkmale der Filterkerze für den erfindungsgemäßen Rückspülfilter sind in den Ansprüchen 25 bis 27 angegeben.

Der Antrieb für die Rückspüleinrichtung des erfindungsgemäßen Rückspülfilters kann z.B. ein elektrischer Drehantrieb sein, der an der Filteraußenseite angeordnet ist und über ein Getriebe mit der im Inneren des Filters zentral angeordneten Drehwelle des Spülglieds verbunden ist.

Insbesondere bei Rückspülfiltern mit kontinuierlicher Rückspülung ist es jedoch vorteilhaft, wenn der Antrieb ein Hydraulikantrieb mit einem im Flüssigkeitskreislauf angeordneten Turbinenrad und einem Untersetzungsgetriebe ist, das mit der Drehwelle des Spülgliedes gekoppelt ist. Ein derartiger Hydraulikantrieb, der auch bei anderen Filtertypen zur Anwendung kommen und dem eine eigene schutzwürdige Bedeutung zukommt, hat den Vorteil, daß auf elektrisch betriebene Bauteile am Filter praktisch vollkommen verzichtet werden kann, da zum Antrieb der Rückspüleinrichtung der der Flüssigkeit innewohnende Flüssigkeitsdruck verwendet wird.

Das Turbinenrad des Hydraulikantriebs, das zweckmäßig eine Axialturbine ist, kann im Trübezulauf des Rückspülfilters angeordnet sein. In diesem Falle ist das Untersetzungsgetriebe, das die hohe Drehzahl der Turbine in die zum Drehen des Spülgliedes erforderliche niedrige Drehzahl untersetzt, zweckmäßig in der ersten Einlaufkammer des Filtergehäuses in unmittelbarer Nähe zum Spülglied angeordnet. Insbesondere wenn die in der zu filternden Schmutzflüssigkeit enthaltenen Schmutzpartikel zu stark schleißend sind und die Turbine oder das Getriebe beschädigen könnten, ist es auch möglich, die Turbine im Filtratablauf des Filters anzuordnen.

In manchen Fällen ist es auch denkbar, wenn das Turbinenrad im Schlammablauf angeordnet ist und von der Rückspülflüssigkeit angetrieben wird.

Das Untersetzungsgetriebe weist zweckmäßig eine Schneckenradgetriebestufe auf, so daß die erforderliche Untersetzung der hohen Turbinenraddrehzahlen auf die geringen Drehzahlen der Spülgliedwelle in nur wenigen Stufen erfolgen kann und das Getriebe entsprechend kompakt gebaut ist.

Weitere Merkmale und Vorteile der Erfindung ergeben sich aus der nachfolgenden Beschreibung und den Zeichnungen, anhand derer die Erfindung an bevorzugten Ausführungsbeispielen näher erläutert ist. Es zeigt:
- Fig. 1: einen Rückspülfilter nach der Erfindung in einem Längsschnitt;

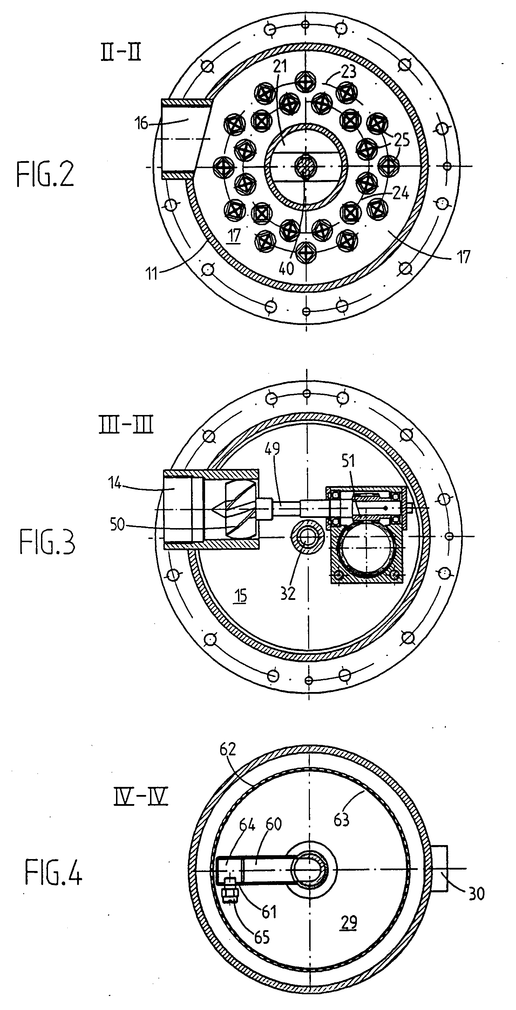

- Fig. 2: den Gegenstand der Fig. 1 in einem Querschnitt längs der Linie II-II;
- Fig. 3: einen Querschnitt längs der Linie III-III nach Fig. 1;
- Fig. 4: einen Querschnitt längs der Linie IV-IV nach Fig. 1;
- Fig. 5: ein Filterelement für den Einsatz in dem erfindungsgemäßen Rückspülfilter in einer Längsansicht und teilweise im Schnitt;
- Fig. 6: den Gegenstand der Fig. 5 in einem Schnitt längs der Linie VI-VI;
- Fig. 7: eine andere Ausführungsform der Filterkerze in einer Fig. 6 entsprechenden Querschnittdarstellung;
- Fig. 8: eine weitere Ausführungsform der Filterkerze in einer Fig. 5 entsprechenden Darstellung; und
- Fig. 9: den Gegenstand der Fig. 8 in einem Schnitt längs der Linie VIII-VIII.

In der Zeichnung bezeichnet 10 einen Rückspülfilter mit einem etwa zylindrischen Filtergehäuse 11 und einem dieses an der Oberseite verschließenden Gehäusedeckel 12, der mit Schrauben 13 mit dem Filtergehäuse lösbar verbunden ist. Das Filtergehäuse 11 hat in seinem unteren Bereich einen quer zu seiner Längsachse angeordneten Filtereinlaß 14, der in eine untere Einlaufkammer 15 mündet. Im mittleren Bereich hat das Filtergehäuse 11 oberhalb des Filtereinlasses 14 einen Filterauslaß 16, über den das Filtrat abgeführt wird. Der Filterauslaß 16 steht mit einer Filtratkammer 17 in Verbindung, die sich oberhalb der unteren Einlaßkammer befindet und gegenüber dieser über eine untere Lochringplatte 18 abgetrennt ist. Oberhalb der Filtratkammer 17 befindet sich im Filtergehäuse 11 eine obere Einlaufkammer 19, die gegenüber der Filtratkammer 17 über eine zweite, obere Lochringplatte 20 abgedichtet ist und die über eine zentrale Verbindungsleitung 21 mit der unteren Filtratkammer 15 in Verbindung steht.

Die Lochringplatten 18, 20 sind mit einer Vielzahl von miteinander fluchtenden Bohrungen 22 versehen, die auf zwei zueinander konzentrischen Kreisen 23, 24 um den Plattenmittelpunkt herum angeordnet sind. Zwischen den jeweils zueinander fluchtenden Bohrungen 22 der oberen und unteren Lochringplatte 20 bzw. 18 sind in der Filtratkammer langgestreckte Filterelemente 25 oder Filterkerzen derart angeordnet, daß ihr oberes und unteres Ende 26 bzw. 27 mit einer Anschlußmuffe 28 in der jeweiligen Bohrung 22 abdichtend befestigt ist.

Unterhalb der unteren Einlaufkammer 15 ist am Filtergehäuse 11 ein Schlammsammelgehäuse 29 angeflanscht, das eine Kammer bildet und das einen Schlammabzugsstutzen 30 aufweist, an dessen außenliegenden Ende ein nicht näher dargestelltes Schlammablaßventil für den Schlammabzug angeflanscht sein kann. Die Schlammsammelkammer 29 ist gegenüber der unteren Einlaufkammer 15 abgedichtet und über eine in einem Gleitlager 31 drehbar gelagerte Hohlwelle 32 mit einem Spülglied 33 verbunden, das sich in der unteren Einlaufkammer 15 befindet und zwei quer gerichtete Arme 34, 35 aufweist, die als Hohlarme ausgebildet sind. An ihren freien Enden haben die Arme 34, 35 ein Anschlußstück 36 in Form eines federbelasteten Hohlkolbens 37, der von unten gegen die eine Steuerspiegelfläche 38 bildende untere Lochringplatte 18 drückt. Dabei ist die Anordnung so getroffen, daß das Anschlußstück 36 des einen Arms 34 die Bohrungen 22 am äußeren Lochkreis 23 und das Anschlußstück des zweiten Arms 35 die Bohrungen am inneren Lochkreis bei Drehung der Hohlwelle 32 überstreicht, so daß eine Flüssigkeitsverbindung zwischen den einzelnen Filterelementen 25 und dem Spülglied 33 erreicht wird. Die Hohlkolben 37 weisen jeweils einen ringförmigen Gleitbelag auf, vorzugsweise aus verschleißfestem Kunststoff,mit dem sie sich gegen die Steuerspiegelfläche 38 unter Abdichtung anlegen.

Die Hohlwelle 32 ist an ihrem oberen Ende 39 mit einer Verbindungswelle 40 drehfest verbunden, die zentral im Filtergehäuse 11 durch die Verbindungsleitung 21 und obere Einlaufkammer 19 geführt ist und im Gehäusedeckel 12 in einem Kopflager 41 drehbar gelagert ist. Wenig unterhalb des Kopflagers 41 ist an der Verbindungswelle 40 eine Drosselvorrichtung 42 mittels einer Klemmschelle 43 befestigt, die aus einer zweiarmigen Auslegerstange 44 und hieran befestigten Drosselscheiben 45, 46 besteht. Dabei ist die Anordnung so getroffen, daß die eine Drosselscheibe 45 genau mit dem Anschlußstück 36 des ersten Spülgliedarms 34 und die andere Drosselscheibe 46 mit dem Anschlußstück des zweiten Spülgliedarms 35 fluchtet, so daß die Drosselscheiben bei Drehung der Welle 32, 40 die Lochkreise 23, 24 der oberen Lochringplatte 20 überstreichen.Die Drosselscheiben 45, 46 sind mittels Einstellschrauben 47 an der Auslegerstange 44 befestigt und so in Lage und Abstand a zur oberen Lochringplatte 20 einstellbar.

Zum Antrieb der vorstehend beschriebenen Rückspüleinrichtung ist in der unteren Einlaufkammer 15 des Filters 10 ein Hydraulikantrieb 48 vorgesehen, der aus einer Turbinenwelle 49 mit im Filtereinlaß 14 angeordneten Axial-Turbinenrad 50 und einem Untersetzungs-Schneckengetriebe 51 besteht, dessen Abtriebswelle 52 mit der Hohlwelle 32 über einen untersetzenden Zahnradtrieb 53 gekoppelt ist.

Die Hohlwelle 32 mündet mit ihrem unteren, in die Schlammsammelkammer 29 ragenden Ende 55 in einen Schlammverteiler 56 und ist drehfest mit diesem verbunden. Der Schlammverteiler 56 ist zentral am Boden 57 des Schlammsammelgehäuses 29 drehbar gelagert und weist eine Axialbohrung 58 und eine mit dieser in Verbindung stehende Radialbohrung 59 auf, die in ein Trägerrohr 60 mit daran befestigter Abreinigungsvorrichtung 61 für ein Nachschaltsieb 62 mündet, das eine zylindrische Filter- bzw. Siebfläche 63 im Schlammsammelgehäuse 29 bildet. Die Abreinigungsvorrichtung 61 besteht im wesentlichen aus einem oben und unten verschlossenen Rohrstück 64 mit quadratischem Querschnitt, in dem mehrere Schlammsprühdüsen 65 so befestigt sind, daß ihre Sprührichtung etwa tangential auf das Nachschaltsieb 62 gerichtet ist.

Der beschriebene Filter arbeitet wie folgt:

Die mit Schmutzpartikeln beladene Schmutzflüssigkeit tritt durch den Filtereinlaß 14 ins Filtergehäuse 11 ein und füllt gleichermaßen die untere Einlaufkammer 15 und über die zentrale Verbindungsleitung 21 die obere Einlaufkammer 19. Die eintretende Schmutzflüssigkeit treibt das Axialturbinenrad 50 an und verdreht so über das Untersetzungsgetriebe 51, 52 die Drehwelle für Spülglied 33, Drosselvorrichtung 42 und Abreinigungsvorrichtung 61.

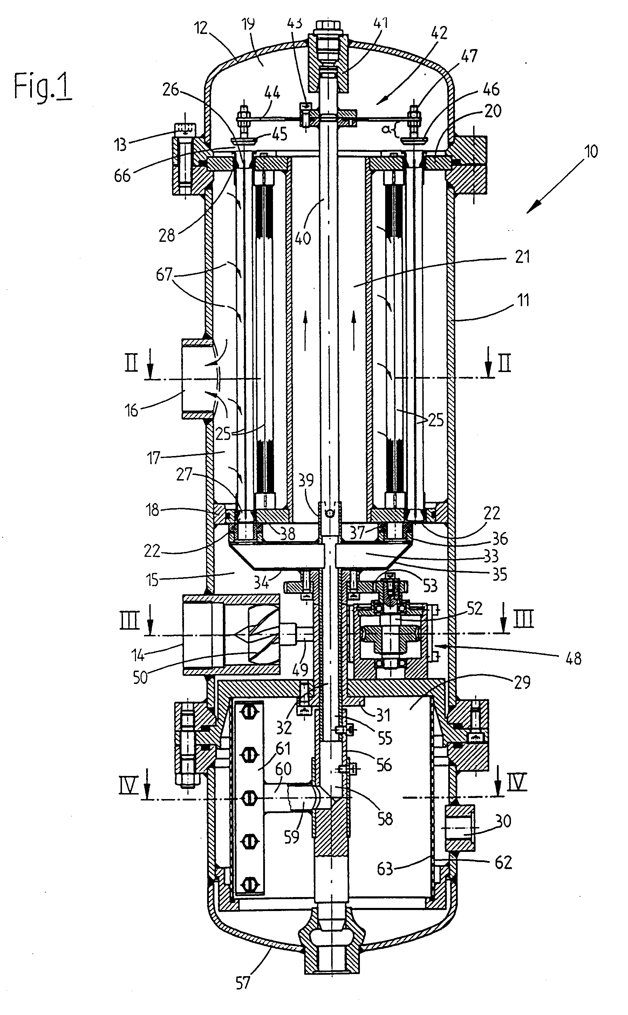

Die jeweils nicht rückgespülten Filterelemente werden gleichermaßen vom unteren und oberen Ende her von der Schmutzflüssigkeit durchströmt, wobei sich das Filtrat in der Filtratkammer 17 sammelt und den Filter über den Filterauslaß 16 verläßt. Die jeweils in Rückspülung befindlichen Filterelemente - in Fig. 1 das äußere Filterelement auf der linken Filterseite und das innere Filterelemente auf der rechten Filterseite - sind an ihrem unteren Ende 27 mit dem Spülglied 33 verbunden und an ihrem oberen Ende 26 von den Drosselscheiben 45, 46 unter Bildung eines Ringspalts 66 überdeckt. In dieser Stellung von Spülglied und Drosselvorrichtung strömt Schmutzflüssigkeit aus der oberen Einlaufkammer 19 in die abzureinigenden Filterkerzen 25, wobei sie beim Durchströmen des Ringspaltes 66 soviel ihres Druckes verliert, daß der Flüssigkeitsdruck im Inneren der zu reinigenden Filterkerzen geringer ist als der Druck in der die Kerzen 25 umgebenden Filtratkammer 17. Durch dieses Druckgefälle werden die Kerzen nicht nur von oben nach unten mit Schmutzflüssigkeit hoher Turbulenz und Geschwindigkeit durchströmt, sondern es fließt zusätzlich über die gesamte Filterkerzenlänge Filtrat zurück aus der Filtratsammelkammer 17 ins Filterkerzeninnere, wie dies durch die Pfeile 67 in Fig. 1 angedeutet ist. Hierdurch ergibt sich eine besonders effektive Abreinigung des Filtergewebes an der Innenseite der Filterelemente.

Der Filterschlamm wird dann über das Spülglied 33 und die Hohlwelle 32 in den Schlammverteiler 56 und von dort zur Abreinigungsvorrichtung 61 geleitet und über die Schlammsprühdüsen 65 etwa tangential von innen auf das zylindrische Nachschaltsieb 62 aufgesprüht. Das Nachschaltsieb ist verhältnismäßig grobmaschig und dient zum Zurückhalten besonders grober Verunreinigungen, die durch die sich am Sieb entlangdrehende Abreinigungsvorrichtung 61 von diesem abgekratzt werden und sich am Boden 57 der Schlammsammelkammer 29 sammeln, wo sie über eine nicht dargestellte Ablaßvorrichtung aus dem Filter entfernt werden können. Der dermaßen von groben Verunreinigungen befreite Schlamm verläßt den Filter über den Schlammabzugsstutzen 30.

Das Spülglied wird gemeinsam mit der Drosselvorrichtung kontinuierlich weitergedreht und reinigt somit bei einer vollständigen Umdrehung alle Filterelemente nacheinander ab.

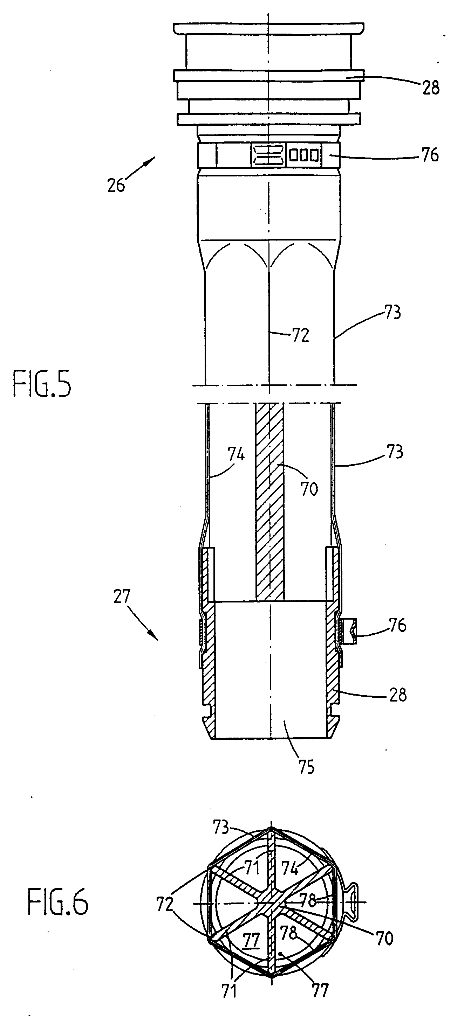

Die Fig. 5 bis 9 zeigen Filterkerzen 25, wie sie bevorzugt bei dem Rückspülfilter nach der Erfindung Verwendung finden können. Die in den Fig. 5 und 6 gezeigte Filterkerze besteht dabei aus einem im Querschnitt sternförmigen Stützkörper 70 mit sechs Sternspitzen 71, die an ihren freien Enden Stützkanten 72 für das aus einem Gewebeschlauch 73 bestehende Filtermittel 74 bilden, der wie ein Strumpf über den Stützkörper gezogen ist. Am vorderen und hinteren Ende 26 bzw. 27 ist die Filterkerze 25 mit je einer Anschlußmuffe 28 mit etwa kreisförmigem Einlaufquerschnitt 75 versehen, die auf die Sternspitzen 71 aufgesteckt sind. Der Gewebeschlauch 73 überdeckt die Anschlußmuffen 28 an ihrem äußeren Umfang und ist dort mittels Spannschellen 76 festgeklemmt. Wie insbesondere aus Fig. 6 erkennbar ist, hat die Filterkerze in dieser Ausführungsform 6 im Querschnitt etwa dreieckförmige Filterkammern 77, die einerseits von den Sternspitzen 71 und andererseits von Gewebeschlauch 73 begrenzt sind. Es ist ersichtlich, daß das Filtergewebe hierbei eine glatte Fläche 78 bildet, die in Durchströmrichtung der Schmutzflüssigkeit keine Hindernisse aufweist, an denen es zur Wirbelbildung und Anlagerung von Schmutzpartikeln kommen kann. Vielmehr ist bei dieser Anordnung sichergestellt, daß die Strömung der Schmutz- bzw. Rückspülflüssigkeit entlang des Filtermittels 73 bis nahe an dieses heran im turbulenten Bereich liegen kann, so daß eine besonders gute Abreinigung der Kerze beim Rückspülen erfolgt.

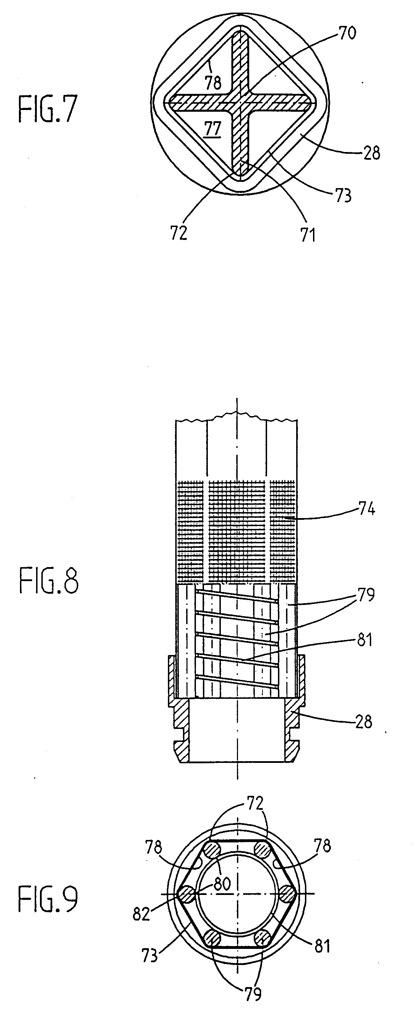

Die in Fig. 7 gezeigte Ausführungsform der Filterkerze eignet sich besonders für kleine Kerzen-Nenndurchmesser. Hierbei hat der Stützkörper 70 lediglich vier Sternspitzen 71, über die der Gewebeschlauch 73 gezogen ist und an deren Stützkanten 72 sich abstützt. Die Anschlußmuffen 28 sind in diesem Falle über den Gewebeschlauch angeordnet und klemmen diesen zwischen sich und dem Stützkörper ein.

Fig. 8 und 9 zeigen eine besonders vorteilhafte Ausgestaltung der Filterkerze. In diesem Fall besteht der Stützkörper 70 aus sechs Stützstäben 79 mit kreisförmigem Querschnitt, die an ihrer Innenseite 80 mit an einem nach Art einer Schraubendruckfeder ausgebildeten Versteifungselement 81 verbunden sind. Sowohl das Versteifungselement 81 als auch die Stützstäbe 79 bestehen aus Stahldraht und können in einfacher Weise miteinander verschweißt oder verlötet sein. An ihrer Außenseite 82 bilden die Stützstäbe 79 die Stützkanten für das Filtergewebe, das aus einem Drahtgewebeschlauch bestehen kann und über den Stützkörper gezogen und an endseitig angebrachten Anschlußmuffen 28 in geeigneter Weise befestigt ist. Auch bei dieser Ausführungsform bildet das Filtermittel an der Kerzeninnenseite glatte Flächen 78, an denen die rückspülende Flüssigkeit ungehindert vorbeiströmen kann.

Die Erfindung ist nicht auf das beschriebene Ausführungsbeispiel beschränkt, sondern es sind eine Vielzahl von Änderungen möglich, ohne den Rahmen der Erfindung zu verlassen. So ist es beispielsweise möglich, den Hydraulikantrieb für das Spülglied am Filterauslaß oder sogar am Schlammablaß anzuordnen. Auch ist es möglich, anstelle eines Hydraulikmotors einen elektrischen Motorantrieb vorzusehen, was insbesondere dann zweckmäßig sein kann, wenn die Rückspülung der Filterelemente diskontinuierlich durchgeführt werden soll. Der abzuführende Schlamm kann auch direkt, d.h. nicht über die Schlammabzugskammer aus dem Filter entfernt werden. Anstelle der Drosselscheiben können auch andere Drosselelemente, z.B. Drosselblenden o.dgl. verwendet werden, wenn dies im Einzelfall vorteilhaft ist. Für große Filterleistungen können die Filterelemente auch in drei oder mehr Ringen konzentrisch umeinander angeordnet sein.

## Patentansprüche

1. Rückspülfilter mit im Filtergehäuse kreisförmig zueinander angeordneten, in Längsrichtung durchströmten Filterelementen, die im Filtrierbetrieb mit ihren beiden Enden (26, 27) mit dem Filtereinlaß verbunden bzw. verbindbar sind und zur Rückspülung einzeln oder gruppenweise an ein mit einem Schlammablauf in Verbindung stehendes, von einem Drehantrieb angetriebenes Spülglied anschließbar sind, **dadurch gekennzeichnet, daß** die Filterelemente (25) mit der zu filtrierenden Schmutzflüssigkeit rückspülbar sind und dabei an ihrem dem Spülglied (33) entgegenliegenden Einlaufende (26) mit einem oder mehreren Drosselelemente(en) (45, 46) abgedeckt bzw. abdeckbar sind.

2. Rückspülfilter nach Anspruch 1, **dadurch gekennzeichnet, daß** das Drosselelement (45 bzw. 46) eine Drosselscheibe ist, die sich im Abstand (a) von dem Einlaufende (26) befindet und mit diesem einen Ringspalt (66) bildet.

3. Rückspülfilter nach Anspruch 1 oder 2, **dadurch gekennzeichnet, daß** die Drosselscheibe (45 bzw. 46) in ihrem Abstand (a) zum Einlaufende (20) einstellbar ist.

4. Rückspülfilter nach einem der Ansprüche 1 bis 3, **dadurch gekennzeichnet, daß** das bzw. die Drosselelement(e) (45, 46) und das Spülglied (33) an einer gemeinsamen, im Inneren des Filtergehäuses angeordneten Drehwelle (32, 40) befestigt sind.

5. Rückspülfilter nach einem der Ansprüche 1 bis 4, **dadurch gekennzeichnet, daß** die Filterelemente (25) auf mindestens zwei zueinander konzentrischen Lochkreisen (23, 24) angeordnet sind.

6. Rückspülfilter nach einem der Ansprüche 1 bis 5, **dadurch gekennzeichnet, daß** das Filtergehäuse (11) eine erste Einlaufkammer (15) und eine mit dieser über eine Verbindungsleitung (21) verbundene zweite Einlaufkammer (19) aufweist.

7. Rückspülfilter nach einem der Ansprüche 1 bis 6, **dadurch gekennzeichnet, daß** die Verbindungsleitung (21) im Zentrum der in Kreisringen (23, 24) angeordneten Filterelemente (25) liegt.

8. Rückspülfilter nach einem der Ansprüche 1 bis 7, **dadurch gekennzeichnet, daß** die Filterelemente (25) geradlinig verlaufende beidseitige offene Filterkerzen sind, die zwischen einer ersten Lochringplatte (18) und einer zweiten Lochringplatte (20) angeordnet sind, die für jede Filterkerze (25) ein Loch (22) für den Schmutzflüssigkeitsdruchtritt aufweisen.

9. Rückspülfilter nach einem der Ansprüche 1 bis 8, **dadurch gekennzeichnet, daß** eine der Lochringplatten (18) eine Steuerspiegelfläche (38) für das Spülglied (33) bildet, das mit mindestens einem auf der Steuerspiegelfläche (38) gleitenden Anschlußstück (36) versehen ist und die Löcher (22) bei seiner Drehbewegung in wechselnder Folge mit dem Schlammablauf (32) verbindet.

10. Rückspülfilter nach einem der Ansprüche 1 bis 9, **dadurch gekennzeichnet, daß** das Spülglied (33) wenigstens zwei radiale Spülarme (34, 35) aufweist, wobei der eine Spülarm (34) die Filterelemente (25) am äußeren Kreisring (23) und der andere Spülarm (35) die Filterelemente (25) am inneren Kreisring (24) für die Rückspülung ansteuert.

11. Rückspülfilter nach einem der Ansprüche 1 bis 10, **dadurch gekennzeichnet, da**ß die Drehwelle (32) für das Spülglied (33) als Hohlwelle ausgebildet ist und eine Schlammabzugsleitung bildet.

12. Rückspülfilter nach einem der Ansprüche 1 bis 11, **dadurch gekennzeichnet, daß** die Schlammabzugsleitung (32) in eine Schlammsammelkammer (29) mit einem Nachschaltfilter und/oder -sieb (62) mündet.

13. Rückspülfilter nach einem der Ansprüche 1 bis 12, **dadurch gekennzeichnet, daß** der Nachschaltfilter (62) eine zylindrische Filterfläche (63) aufweist, die von innen nach außen durchströmt ist.

14. Rückspülfilter nach Anspruch 13, **dadurch gekennzeichnet, daß** der zylindrischen Filterfläche (63) an ihrer Innenseite eine Abreinigungsvorrichtung (61) zugeordnet ist, die drehfest mit der Drehwelle (32) des Spülglieds (33) verbunden ist.

15. Rückspülfilter nach einem der Ansprüche 11 bis 14, **dadurch gekennzeichnet, daß** die Abreinigungsvorrichtung (61) mit Schlammsprühdüsen (65) versehen ist, die mit der Schlammabzugsleitung (32) verbunden sind und von dieser mit Schlamm beaufschlagt sind.

16. Rückspülfilter nach Anspruch 15, **dadurch gekennzeichnet, daß** die Schlammsprühdüsen (65) etwa tangential zur zylindrischen Filterfläche (63) ausgerichtet sind.

17. Rückspülfilter nach einem der Ansprüche 1 bis 16, **dadurch gekennzeichnet, daß** er mit einem Hydraulikantrieb (48) für das drehbare Spülglied versehen ist, der ein im Flüssigkeitskreislauf angeordnetes Turbinenrad (50) und ein Untersetzungsgetriebe (51, 53) aufweist, das mit der Drehwelle (32) des Spülglieds (33) gekoppelt ist.

18. Rückspülfilter nach Anspruch 17, **dadurch gekennzeichnet, daß** daß das Turbinenrad (50) im Trübezulauf (14) des Rückspülfilters (10) angeordnet ist.

## Claims

1. Back-purge filter, comprising filter elements, which are arranged circularly relative to each other in the filter housing and flowed through in the longitudinal direction and during filtering operations connected or connectable with both its ends (26, 27) to the filter inlet and for back-purging connected individually or in groups to a rinsing element which is connected to a sludge discharge and driven by a rotary drive, **characterised in that** the filter elements (25) are back-purgable with the soiled liquid which is to be filtered and covered or coverable with one or more throttle elements (45, 46) at the input end (26) opposite the rinsing element (33).

2. Back-purge filter according to Claim 1, **characterised in that** the throttle element (45 or 46) is a throttle plate which is positioned at a distance (a) from the input end (26), forming with the latter an annular gap (66).

3. Back-purge filter according to Claim 1 or 2, **characterised in that** the throttle plate (45 or 46) is adjustable relative to its distance (a) to the input end (20).

4. Back-purge filter according to one of Claims 1 to 3, **characterised in that** the throttle element(s) (45, 46) and the rinsing element (33) are mounted on a common rotary shaft (32, 40) arranged inside the filter housing.

5. Back-purge filter according to one of Claims 1 to 4, **characterised in that** the filter elements (25) are arranged on at least two hole circles (23, 24) which are concentric relative to each other.

6. Back-purge filter according to one of Claims 1 to 5, **characterised in that** the filter housing (11) comprises a first input chamber (15) and a second input chamber (19) which is linked to the latter via a connecting pipe (21).

7. Back-purge filter according to one of Claims 1 to 6, **characterised in that** the connecting pipe (21) is positioned in the centre of the filter elements (25) which are arranged in circular rings (23, 24).

8. Back-purge filter according to one of Claims 1 to 7, **characterised in that** the filter elements (25) are filter candles, which extend in a straight line, are open on both sides and arranged between a first perforated plate (18) and a second perforated plate (20) having for each filter candle (25) a hole (22) to offer a passage to the soiled liquid.

9. Back-purge filter according to one of Claims 1 to 8, **characterised in that** one of the perforated plates (18) forms a control mirror surface (38) for the rinsing element (33) which is provided with at least one connecting piece (36) which glides on the control mirror surface (38) and connects the holes (22) during a rotary movement in alternating sequence to the sludge discharge (32).

10. Back-purge filter according to one of Claims 1 to 9, **characterised in that** the rinsing element (33) comprises at least two radial rinsing arms (34, 35), and the one rinsing arm (34) controls the filter elements (25) at the outer circle (23) and the other rinsing arm (35) controls the filter elements (25) at the inner circle (24) for back-purging.

11. Back-purge filter according to one of Claims 1 to 10, **characterised in that** the rotary shaft (32) for the rinsing element (33) is a hollow shaft and forms a sludge extraction pipe.

12. Back-purge filter according to one of Claims 1 to 11, **characterised in that** the sludge extraction pipe (32) merges into a sludge collecting chamber (29) with a downstream filter and/or downstream sieve (62).

13. Back-purge filter according to one of Claims 1 to 12, **characterised in that** the downstream filter (62) comprises a cylindrical filter surface (63) which is flowed through from the inside to the outside.

14. Back-purge filter according to Claim 13, **characterised in that** associated with the inside of the cylindrical filter surface (63) is a cleaning device (61) which is non-rotationally connected to the rotary shaft (32) of the rinsing element (33).

15. Back-purge filter according to one of Claims 11 to 14, **characterised in that** the cleaning device (61) is provided with sludge spray nozzles (65) which are connected to the sludge extraction pipe (32) and loaded by the latter with sludge.

16. Back-purge filter according to Claim 15, **characterised in that** the sludge spray nozzles (65) are aligned approximately tangentially to the cylindrical filter surface (63).

17. Back-purge filter according to one of Claims 1 to 16, **characterised in that** it is provided with a hydraulic drive (48) for the rotary rinsing element, comprising a turbine wheel (50) arranged in the liquid circulation and a reduction gearing (51, 53) which is coupled to the rotary shaft (32) of the rinsing element (33).

18. Back-purge filter according to Claim 17, **characterised in that** the turbine wheel (50) is arranged in the murky input (14) of the back-purge filter (10).

## Revendications

1. Filtre à rinçage à contre-courant, comportant des éléments filtrants disposés les uns par rapport aux autres en formant un cercle dans un carter de filtre et traversés par un écoulement dans la direction longitudinale, les éléments filtrant étant reliés ou susceptible d'être reliés pendant le fonctionnement du filtre, par leurs deux extrémités (26, 27), à une entrée de filtre et pouvant être raccordés pour effectuer le rinçage à contre-courant individuellement ou par groupe à un organe de rinçage relié à une évacuation de boue et entraîné par un entraînement rotatif, caractérisé en ce que les éléments filtrants (25) sont susceptibles d'être rincés à contre-courant avec le liquide sale à filtrer et recouverts ou susceptibles d'être recouverts, à leurs extrémités d'entrée (26) opposées à l'organe de rinçage (33), par un ou plusieurs éléments d'étranglement (45, 46).

2. Filtre à rinçage à contre-courant selon la revendication 1, caractérisé en ce que l'élément d'étranglement (45,46), est un disque d'étranglement, qui se trouve à une distance (a) de l'extrémité d'entrée (26) et constitue avec celle-ci un interstice annulaire (66).

3. Filtre à rinçage à contre-courant selon la revendication 1 ou 2, caractérisé en ce que le disque d'étranglement (45,46) est réglable concernant sa distance (a) par rapport à l'extrémité d'entrée (20).

4. Filtre à rinçage à contre-courant selon l'une des revendications 1 à 3, caractérisé en ce que le ou les éléments d'étranglement (45, 46) et l'organe de rinçage (33) sont fixés sur un arbre rotatif (32, 33) commun, disposé à l'intérieur du carter de filtre.

5. Filtre à rinçage à contre-courant selon l'une des revendications 1 à 4, caractérisé en ce que les éléments filtrants (25) sont disposés sur au moins deux cercles perforés (23, 24) concentriques l'un par rapport à l'autre.

6. Filtre à rinçage à contre-courant selon l'une des revendications 1 à 5, caractérisé en ce que le carter de filtre (11) présente une première chambre d'entrée (15) et une deuxième chambre d'entrée (19), reliée à celle-ci par l'intermédiaire d'une conduite de liaison (21).

7. Filtre à rinçage à contre-courant selon l'une des revendications 1 à 6, caractérisé en ce que la conduite de liaison (21) est placée au centre des éléments filtrants (25) disposés en anneaux de cercle (23, 24).

8. Filtre à rinçage à contre-courant selon l'une des revendications 1 à 7, caractérisé en ce que les éléments filtrants (25) sont des bougies filtrantes rectilignes, ouvertes des deux côtés, qui sont disposées entre une première plaque à perforations en anneau (18) et une deuxième plaque à perforations en anneau (20), qui présentent pour chaque bougie filtrante (25) un trou (22) destiné au passage du liquide sale.

9. Filtre à rinçage à contre-courant selon l'une des revendications 1 à 8, caractérisé en ce que l'une des plaques à perforations en anneau (18) constitue une surface spéculaire de commande (38) pour l'organe de rinçage (33), qui est pourvue d'au moins une pièce de raccordement (36) glissant sur la surface de glissement de commande (38) et reliant les trous (22) en une succession alternée avec l'évacuation de boue (32) lors de son mouvement tournant.

10. Filtre à rinçage à contre-courant selon l'une des revendications 1 à 9, caractérisé en ce que l'organe de rinçage (33) présente au moins deux bras de rinçage radiaux (33, 35), un bras de rinçage (34) commandant les élément filtrants (25) se trouvant sur l'anneau de cercle (23) extérieur, et l'autre bras de rinçage (35) commandant les éléments filtrants (25) se trouvant sur l'anneau de cercle (24) intérieur pour le rinçage à contre-courant.

11. Filtre à rinçage à contre-courant selon l'une des revendications 1 à 10, caractérisé en ce que l'arbre rotatif (32) pour l'organe de rinçage (33) est réalisé sous forme d'arbre creux et constitue une conduite d'extraction des boues.

12. Filtre à rinçage à contre-courant selon l'une des revendications 1 à 11, caractérisé en ce que la conduite d'extraction de boue (32) débouche dans une chambre collectrice de boue (29) équipée d'un filtre et/ou d'un tamis (62) à branchement aval.

13. Filtre à rinçage à contre-courant selon l'une des revendications 1 à 12, caractérisé en ce que le filtre à branchement aval (62) présente une surface filtrante (63) cylindrique traversée par un écoulement allant de l'intérieur à l'extérieur.

14. Filtre à rinçage à contre-courant selon la revendication 13, caractérisé en ce qu'à la surface filtrante (63) cylindrique est associé, sur sa face intérieure, à un dispositif de nettoyage (61) relié de façon assujettie à rotation à l'arbre rotatif (32) de l'organe de rinçage (33).

15. Filtre à rinçage à contre-courant selon l'une des revendications 11 à 14, caractérisé en ce que le dispositif de nettoyage (61) est pourvu de buses de projection de boues (65), reliées à la conduite d'extraction de boues (32) et alimentées en boues par celle-ci.

16. Filtre à rinçage à contre-courant selon la revendication 15, caractérisé en ce que les buses de projection de boues (65) sont orientées à peu près tangentiellement par rapport à la surface filtrante cylindrique (63).

17. Filtre à rinçage à contre-courant selon l'une des revendications 1 à 16, caractérisé en ce qu'il est pourvu d'un entraînement hydraulique (48) destiné à l'organe de rinçage rotatif et présente une roue de turbine (50), disposée dans le circuit de liquide et une transmission de réduction de vitesse (51, 53) qui est couplée à l'arbre rotatif (32) de l'organe de rinçage (33).

18. Filtre à rinçage à contre-courant selon la revendication 17, caractérisé en ce que la roue de turbine (50) est disposée dans l'amenée d'eau boueuse (14) du filtre à rinçage à contre-courant (10).
